Europäisches Patentamt

European Patent Office

Office européen des brevets

(19)

(11) Numéro de publication: **0 119 874**
**A2**

## (12) DEMANDE DE BREVET EUROPEEN

(21) Numéro de dépôt: **84400123.0**

(22) Date de dépôt: **20.01.84**

(51) Int. Cl.³: **F 16 H 57/02**

---

(30) Priorité: **24.01.83 FR 8301035**

(71) Demandeur: **ENGRENAGES ET REDUCTEURS CITROEN - MESSIAN - DURAND Société Anonyme, 3 rue Latécoère, F-78140 Velizy-Villacoubiay (FR)**

(43) Date de publication de la demande: **26.09.84**
**Bulletin 84/39**

(72) Inventeur: **Liszczynski, Claude, 42 Avenue de Stand, F-58000 Nevers (FR)**

(74) Mandataire: **Saint-Martin, René et al, CREUSOT-LOIRE 15 rue Pasquier, F-75383 Paris Cedex 08 (FR)**

(84) Etats contractants désignés: **AT BE DE FR GB IT NL SE**

---

(54) **Perfectionnements à un dispositif d'entraînement de roue dentée à pignon flottant.**

(57) La présente invention se rapporte à des perfectionnement à un dispositif d'entrainement de roue ou de couronne dentée comportant un pignon d'entrainement flottant.

Le dispositif comporte une roue dentée (1) entrainée en rotation par un pignon (2) accouplé à un moteur et monté dans un carter (3) accouplé à un bras (7) relié aux parties fixes (5) par une articulation (6) lui permettant de se déplacer par rapport à ladite roue et qui est soumis à un ressort (9) le repoussant vers la dite roue dentée (1), et il est caractérisé par le fait qu'il comporte des moyens de blocage (10, 13) pour retenir le carter, en contrariant l'action du ressort (9), dans une position de repos éloignée de la roue dentée telle que le pignon soit dégagé de la denture de ladite roue.

Perfectionnements à un dispositif d'entraînement de roue dentée
à pignon flottant

La présente invention se rapporte à des perfectionnements à un dispositif d'entraînement de roue ou couronne dentée comportant un pignon d'entrainement flottant.

Il existe des dispositifs d'entrainement d'une roue dentée dans lesquels le pignon d'entrainement, accouplé à un moteur, est monté dans un carter qui est relié aux parties fixes par un système articulé de manière à suivre les mouvements de la roue dentée. L'effort d'engrènement qui, comme on le sait, est incliné par rapport à la circonférence primitive d'un angle égal à l'angle de pression augmenté ou diminué de l'angle de frottement, se décompose en un effort tangentiel et en un effort radial qui tend à séparer le pignon de la roue. L'effort tangentiel est repris par une barre ou un bras d'attelage du système articulé et l'effort radial est repris par un mécanisme d'appui tel qu'une barre d'attelage.

Il peut arriver que le pignon d'entrainement soit arrêté ou immobilisé à la suite d'un incident sur le moteur ou sur le système d'alimentation de ce moteur. Du fait que la roue dentée menée continue à tourner par inertie ou par entrainement d'un autre pignon, il y a alors une inversion d'effort. Le pignon d'entrainement devient récepteur et l'effort d'engrènement provoque un couple qui tend à le faire dégrener.

On connaît, par l'addition FR 80693, un dispositif du type précédent dans lequel le pignon d'entrainement est maintenu en prise avec la roue dentée par un système d'appui élastique qui permet, en cas d'efforts tangentiels trop élevés ou prédéterminés, d'écarter le pignon d'entrainement d'entrainement en vue d'agir comme limiteur de couple. Ce dispositif ne fonctionne pas en cas d'arrêt intempestif du moteur. Il comporte une genouillère pour repousser le carter du pignon vers la roue dentée et il est de ce fait encombrant.

Le dispositif d'entrainement de roue dentée selon l'invention comporte un pignon accouplé à un moteur et monté dans un carter accouplé à un bras relié aux parties fixes par une articulation lui permettant de se déplacer par rapport à ladite roue et qui est soumis à un ressort le repoussant vers ladite roue dentée.

L'invention a pour but de fournir un système de sécurité de faible encombrement capable de maintenir automatiquement, après un dégrènement le pignon moteur en position éloignée de la roue dentée.

Selon la caractéristique de l'invention, le dispositif comporte des moyens de blocage pour retenir le carter, en contrariant l'action du ressort, dans une position de repos éloignée de la roue telle que le pignon soit dégagé de la denture de ladite roue.

Selon une caractéristique, les moyens de blocage comprennent un organe moteur qui déplace une partie mobile arrêtant le carter dans la position de repos, cet organe moteur étant commandé par l'intermédiaire d'un circuit à partir d'un organe d'entrée actionné par un mouvement de recul du carter.

Selon une autre caractéristique, les moyens de blocage sont constitués par un verrou mécanique.

L'invention va maintenant être décrite avec plus de détails en se référant à des modes de réalisation donnés à titre d'exemple et représentés parles dessins annexés sur lesquels :

- la figure 1 représente une vue partielle en vue de dessus d'un mode de réalisation du dispositif d'entrainement.

- la figure 2 représente une vue partielle en vue de dessus d'un autre mode de réalisation du dispositif d'entrainement.

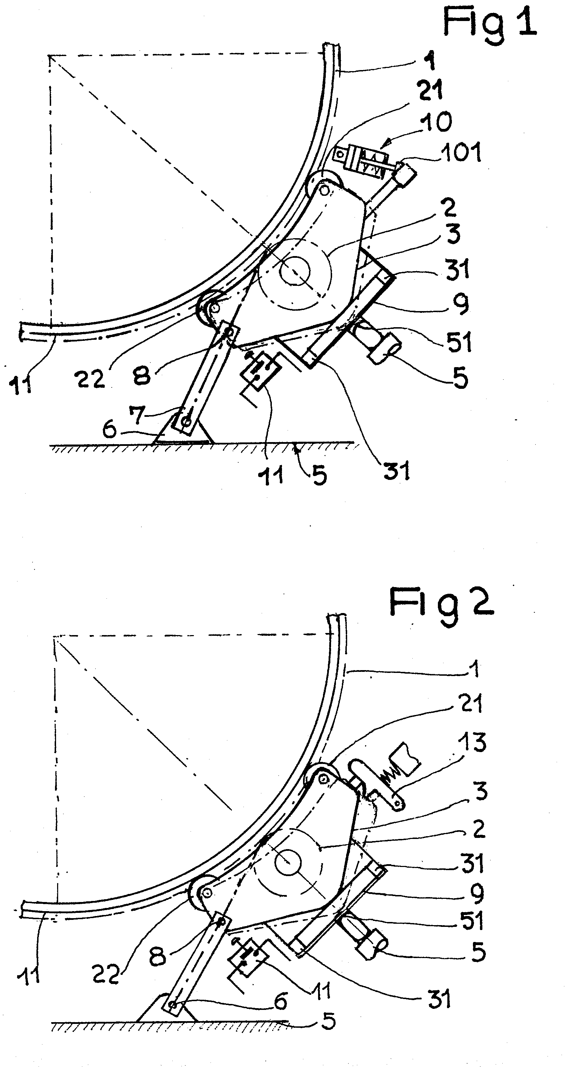

Le dispositif représenté par les figures 1 et 2 comporte une roue ou couronne dentée 1 qui, en fonctionnement normal, est en prise avec un pignon 2 servant à l'entrainer autour d'un axe de rotation vertical. Les dentures de ce pignon et de cette roue dentée sont cylindriques. Le pignon d'entrainement 2 est monté par des paliers dans un chariot ou un carter 3 qui est équipé du côté de la roue dentée de deux paires de galets 21 et 22 ayant des axes parallèles à l'axe de la roue dentée. Lorsque le pignon 2 est en prise avec la roue dentée, les galets 21 et 22 roulent par paires sur deux pistes 11 de la roue dentée qui sont ménagées de part et d'autre de la denture. Dans chaque paire les galets sont disposés de part et d'autre du plan passant par les axes de la roue menée et du pignon d'entrainement. Dans ce mode de réalisation le pignon d'entrainement 2 est entrainé par un moto réducteur-non représenté-qui est fixé au carter 3. L'ensemble constitué par le carter, le pignon d'entrainement et le moto réducteur est suspendu verticalement aux parties fixes par une barre d'attelage.

Le carter 3 est relié aux parties fixes 5 par un bras ou une barre d'attelage 7 qui est accouplée à ces parties fixes par une articulation universelle 6 par exemple une articulation à rotule. Ce bras permet au carter de se déplacer de manière sensiblement radiale par rapport à la roue dentée.

3

La barre d'attelage 7 est par ailleurs reliée au carter par une articulation 8. Dans ce mode de réalisation, Les articulations 6 et 8 sont situées sur une ligne passant par le point de contact des dentures et inclinée par rapport à la tangente au cercle primitif d'un angle supérieur à la somme de l'angle de pression et de l'angle de frottement limite.

Le carter 3 est soumis à un ressort 9 qui tend à le repousser en permanence vers la roue dentée en appliquant les galets 21 et 22 sur les pistes 11. Ce ressort 9 est constitué par un ressort à lame travaillant en flexion entre deux points d'appui extrêmes 31 et un point d'appui médian 51. Dans les modes de réalisation représentés, les deux points d'appui extrêmes 31 sont reliés au carter 3, le point d'appui médian étant relié aux parties fixes. Le montage pourrait être inversé.

Le dispositif comporte des moyens de blocage du carter capables de le retenir, à la suite d'un dégrènement, en contrariant l'action permanente du ressort 9, dans une position éloignée de la roue dentée 1 et telle que le pignon soit totalement dégagé de la denture de ladite roue dentée. Cette position de repos est représentée en traits mixtes sur les dessins.

Dans le mode de réalisation de la figure 1, le dispositif comporte un organe moteur 10 qui en déplaçant une partie mobile 101 arrête le carter 3 dans la position de repos. Cet organe moteur 10 est constitué par un vérin, la partie mobile 101 étant constituée par la tige. Cet organe moteur 10 est commandé par l'intermédiaire d'un circuit de liaison à partir d'un détecteur de position 11 qui est fixé dans une position appropriée pour être manoeuvré par le carter lorsque celui-ci s'éloigne de la roue dentée à l'occasion d'un dégrènement. Ce détecteur est constitué par un contact électrique. La commande peut être réalisée par une solution hydraulique, pneumatique ou électrique.

Ce contact électrique commande l'arrêt du moteur ce qui évite le redémarrage du moteur et la détérioration des dentures.

Dans le mode de réalisation de la figure 2, le dispositif comporte un verrou mécanique 13 à déclic pour bloquer le carter dans la position de repos où le pignon 2 est dégréné de la roue dentée 1. Lorsque le carter 3 est animé d'un mouvement de recul lié à un dégrènement, un doigt de ce carter s'engage derrière le verrou 13. Le carter est ainsi maintenu dans une position de repos. L'effacement du verrou est commandé par un opérateur. Il permet de ramener le pignon d'entrainement 2 en prise avec la roue dentée.

Un contact électrique 11 manoeuvré par le recul du carter permet

4

encore d'arrêter le moteur d'entrainement du pignon.

En marche normale (position en traits pleins sur les dessins), le pignon 2 est maintenu en engrènement avec la roue 1 par la barre d'attelage 7 essentiellement et par le ressort 9 qui intervient surtout pendant les périodes d'arrêts. Si à la suite d'un incident, il y a inversion d'engrènement l'action de la barre oblique 7 provoque le dégrènement du pignon et le carter portant le pignon recule en comprimant le ressort (position en traits mixtes sur les dessins). Dès qu'il atteint la position prédéterminée de repos, il est maintenu dans cette position par le dispositif de verrouillage décrit ci-dessus. Après suppression de l'anomalie ayant provoqué le dégrènement, l'opérateur peut commander le réengrènement du pignon.

Il est bien entendu que l'on peut sans sortir du cadre de l'invention, imaginer des variantes et des perfectionnements de détails et de même envisager l'emploi de moyens équivalents.

5

# REVENDICATIONS

1. Dispositif d'entrainement d'une roue dentée (1) par un pignon (2) accouplé à un moteur et monté dans un carter (3) accouplé à un bras (7) relié aux parties fixes (5) par une articulation (6) lui permettant de se déplacer par rapport à ladite roue et qui est soumis à un ressort (9) le repoussant vers la dite roue dentée (1), caractérisé par le fait qu'il comporte des moyens de blocage (10, 13) pour retenir le carter, en contrariant l'action du ressort (9), dans une position de repos éloignée de la roue dentée telle que le pignon soit dégagé de la denture de ladite roue.

2. Dispositif selon la revendication 1, caractérisé par le fait que les moyens de blocage comprennent un organe moteur (10) qui en déplaçant une partie mobile 101 arrête le carter dans la position de repos, cet organe moteur (10) étant commandé par l'intermédiaire d'un circuit de liaison à partir d'un organe d'entrée (11) actionné par un mouvement de recul du carter (3).

3. Dispositif selon la revendication 1, caractérisé par le fait que les moyens de blocage (13) sont constitués par un verrou mécanique.

4. Dispositif selon l'une quelconque des revendications précédentes, caractérisé par le fait qu'il comporte des moyens (11) pour arrêter le moteur d'entrainement du pignon à la suite d'un dégrènement dudit pignon.

0119874

1/1

Fig 1

Fig 2